# EUROPEAN PATENT SPECIFICATION

(11) **EP 2 587 050 B1**
(45) Date of publication and mention of the grant of the patent: **19.06.2019**
(21) Application number: 11186896.4
(22) Date of filing: 27.10.2011
(51) Int. Cl.: F03D 1/06, F03D 3/06

(54) **Rotor blade**
Rotorblatt
Pale de rotor

(43) Date of publication of application: 01.05.2013
(73) Proprietor: Siemens Gamesa Renewable Energy A/S, 7330 Brande (DK)
(72) Inventor: Lind, Soeren Oemann, 4700 Næstved (DK)
(74) Representative: Aspacher, Karl-Georg

(56) References cited:
- WO-A1-2006/002621
- WO-A1-2010/065928
- WO-A2-2008/052677
- DE-A1-102005 059 298
- DE-A1-102008 037 589
- NL-C2- 1 001 200
- US-A1- 2005 186 081
- US-A1- 2007 189 903
- US-A1- 2009 068 017
- US-A1- 2010 143 135
- US-A1- 2011 211 959

## Description

The invention relates to a rotor blade for a wind turbine, comprising a longitudinal rotor blade base body, whereby a stiffening structure is disposed within the base body.

Diverse rotor blade constructions for wind turbines are known and usually comprise an appropriate stiffening structure within the rotor blade base body in order to withstand the high mechanical loads occurring during operation. As a rule, the mechanical load in a rotor blade is influenced by factors such as wind speed, rotor speed, and rotor blade pitch angle, which indicates the angle of attack of wind, etc. Generally, the higher the load the more material is used for building respective rotor blades, which usually leads to rotor blade constructions of high weight. Hence, in order to reduce the weight of respective rotor blade constructions it is a goal to reduce the loads encountered by the respective rotor blades in operation.

Therefore, different approaches are known from prior art which are based on the principle of building a rotor blade construction which is able to create an inherent twist or torque due to occurring loads. By the twist or rotation around its longitudinal axis, the rotor blade is able to reduce the rotor blade area being exposed to the wind giving rise to a reduced load situation. The creation of an inherent twist may be achieved in a certain arrangement and/or orientation of fibres building respective rotor blades relative to an axis of the rotor blade such as proposed in US 7, 802, 968.

From document WO 2008/052677 A2, a wind turbine rotor blade for a wind turbine is known, which comprises an axially extending central spar comprising at least three panels stiffening the rotor blade. The spar bears at least one section of a trailing section fairing and at least one section of a leading section fairing. The spar can be twisted by applying forces to its corners using tensioning means to reduce trust and torque experienced by the blade as result of an external load.

Further rotor blades with an adaptable blade geometry are known from the documents DE 10 2005 059 298 A1 and US 2011/0211959 A1. Further rotor blades with axially extending stiffening structures are discloses in NL 100 1200 C2, US 2009/0068017 A1, WO 2006/002621 A1 and WO 2010/065928 A1.

However, the known approaches for respective rotor blade constructions having the ability of creating an inherent twist or torque under external loads are oftentimes comparatively cumbersome and costly.

It is the object of the present invention to provide an improved rotor blade having the ability of creating an inherent twist or torque under application of external loads.

This is inventively achieved by a rotor blade according to claim 1.

The inventive principle provides a rotor blade construction, whereby the internal stiffening structure usually extending from the blade root to the blade tip is axially segmented in respective axially adjacently disposed stiffening structure segments. The ability of creating an inherent twist or torque allowing the rotor blade to rotate around the longitudinal axis of the base body under external load is provided by disposing at least one first stiffening structure segment with a different position and/or orientation relative to at least one further stiffening structure segment. Additionally or alternatively, the respective inherent twist or torque may be realised by disposing at least one respective first stiffening structure segment with a different position and/or orientation relative to the longitudinal axis of the base body.

Regarding the case of different orientations of respective first stiffening structure segments relative to respective further stiffening structure segments and/or the longitudinal axis of the base body, it is possible that the orientation of respective first stiffening structure segments is only partially different relative to respective further stiffening structure segments and/or the longitudinal axis of the base body. I.e., a respective first section of a respective first stiffening structure segment shares the same orientation as a respective further stiffening structure segment and/or the longitudinal axis of the base body, whereas a second section of the respective first stiffening structure segment has a different orientation relative to the respective further stiffening structure segment and/or the longitudinal axis of the base body. Hence, an exemplary first stiffening structure segment may comprise a first section extending in the direction of the longitudinal axis of the base body and a second section extending with a certain angle relative to the longitudinal axis of the base body. Of course, a respective first stiffening structure segment may also comprise more than one respective first and second section.

Since the position and/or orientation of respective first stiffening structure segments deviates from further stiffening structure segments or the extension of the longitudinal axis of the base body, local modifications and/or differences in the mechanical behaviour of the base body may be realised along the longitudinal axis of the base body which leads to the desired generation of inherent twist or torque under load. As mentioned above, by twisting the rotor blade, the angle of attack may be reduced leading to a reduction of the loading of the rotor blade.

The concrete arrangement of respective first stiffening structure segments and further stiffening structure segments mainly defines the mechanical behaviour of the rotor blade, so that in dependence of the axial arrangement and number of respective first stiffening structure segments an individual and concerted adjustment of the mechanical properties of respective rotor blades is feasible.

The number of respective stiffening structure segments is at least two. The number of the stiffening structure segment will be mainly defined by the axial dimensions, ie the length of the base body of the rotor blade. Generally, an arbitrary number of respective stiffening structure segment is possible.

As a rule, the twisted or tilted arrangement of first stiffening structure segments is capable of creating the mentioned twist or torque around the longitudinal axis of the base body of the rotor blade when the rotor blade is exposed to external forces.

The longitudinal axis is defined as the line extending between the root and the tip of the base body independent of the concrete geometrical shape of the base body. Hence, the longitudinal axis may be a straight line for base bodies having a straight, linear design or an at least partially curved line for base bodies having an at least partially curved design.

According to an exemplary embodiment of the inventive rotor blade, the at least one first stiffening structure segment may be tilted or twisted relative to the longitudinal axis of the base body. Thus, respective first stiffening structure segments are concertedly inclined, i.e. disposed with a certain angle relative to the longitudinal axis of the base body. Thereby, the geometrical axis of a first stiffening structure segment does not coincide with the longitudinal axis of the base body.

If two or more first stiffening structure segments are tilted or twisted relative to the longitudinal axis of the base body, the tilting or twisting angles of the respective stiffening structure segments may be equal or different.

According to another exemplary embodiment of the inventive rotor blade, at least one further stiffening structure segment is coaxially disposed within the longitudinal axis of the base body, whereby at least one first stiffening structure segment is tilted or twisted relative to the at least one further stiffening structure segment. Thus, respective further stiffening structure segments coaxially extend with the longitudinal axis of the base body, i.e. the geometrical axis, preferably the longitudinal axis, of a respective further stiffening structure segment coincides with the longitudinal axis of the base body.

If two or more stiffening structure segments are coaxially disposed within the longitudinal axis of the base body, whereby they are tilted or twisted relative to the at least one further stiffening structure segment, the tilting or twisting angles of the respective stiffening structure segments may be equal or different.

According to a further exemplary embodiment of the inventive rotor blade, the at least one stiffening structure segment is internally tilted or twisted relative to its own longitudinal axis. Thus, a respective first stiffening structure segment comprises at least two geometrical planes. A respective first stiffening structure segment may have a three-dimensionally curved, inclined, or tilted geometry.

If two or more stiffening structure segments are internally tilted or twisted relative to their own longitudinal axis, the tilting or twisting angles of the respective stiffening structure segments may be equal or different.

Regarding the arrangement of respective stiffening structure segments within the base body of the rotor blade, it is possible that a first stiffening structure segment disposed at an axially inner position of the base body is disposed tilted or twisted and at least one further stiffening structure segment disposed at an axially outer position of the base body is disposed un-tilted, or vice versa. Of course, arbitrary arrangements of respective first stiffening structure segments relative to respective further stiffening structure segments are generally possible. It is thinkable that groups of axially adjacently disposed first stiffening structure segments alternate with groups of axially adjacently disposed further stiffening structure segments.

Regarding respective tilting or twisting angles of respective first stiffening structure segments, it is possible that a first stiffening structure segment is tilted or twisted with an angle of ca. 5 - 30°, particularly 15 - 20°, relative to the at least one further stiffening structure segment or the longitudinal axis of the base body in clockwise direction or anti-clockwise direction. Of course, other tilting or twisting angles are feasible in exceptional cases regarding a longitudinal, horizontal, or vertical axis of the base body.

In the inventive rotor blade, axially adjacently disposed stiffening structure segments at least partially overlap each other in axial direction. The degree of overlap is crucial for the mechanical properties of the respective portion of the base body of the rotor blade. Generally, large overlap areas lead to great mechanical strength. Hence, the degree of overlap is a measure to locally adjust the mechanical properties of the rotor blade and further the ability of creating an inherent twist or torque.

Respective stiffening structure segments within the base body may have the same or different dimensions, particularly in longitudinal direction of the base body. Hence, the inventive stiffening structure segments essentially have the same or different lengths. The geometrical dimensions of respective stiffening structure segments are also a measure in order to locally adjust the mechanical properties of the base body.

Each stiffening structure segment comprises a stiffening web structure built of at least one fibre based, particularly carbon fibre based, fabric within a matrix material. Hence, a respective stiffening structure segment is preferably a composite component having concertedly directed and orientated fibres or fabrics within a, particularly resin-like, matrix material. The fibres are preferably carbon fibres due to their outstanding mechanical properties. Yet, other fibre materials such as glass-fibre or organic fibres are feasible as well. A respective stiffening structure segment may be built of other materials than the aforementioned such as metal in exceptional cases.

Furthermore, the invention relates to a wind turbine, particularly a direct drive wind turbine, comprising a rotor hub having at least one rotor blade attached thereto. The at least one rotor blade is one of the type as described before. The at least one rotor blade is rotatably supported relative to the rotor hub. "Rotatably supported" means that the rotor blade may twist or rotate relative to its own longitudinal axis by the creation of an inherent twist or torque and is not to be confused with respective devices for changing the pitch angle of the rotor blade.

In the following, the invention is described in detail as reference is made to the principle figures, whereby:
- fig. 1: shows an inventive wind turbine;
- fig. 2: shows a perspective view of an exemplary embodiment of an inventive rotor blade in an unloaded and loaded state;
- fig. 3: shows cross-sectionally cut views of the rotor blade of fig. 2; and
- fig. 4 - 10: show principle views of exemplary embodiments of rotor blades, wherein fig. 4, 6, 9 and 10 show embodiments of inventive rotor blades and fig. 5, 7 and 8 show embodiments of rotor blades outside the scope of the invention.

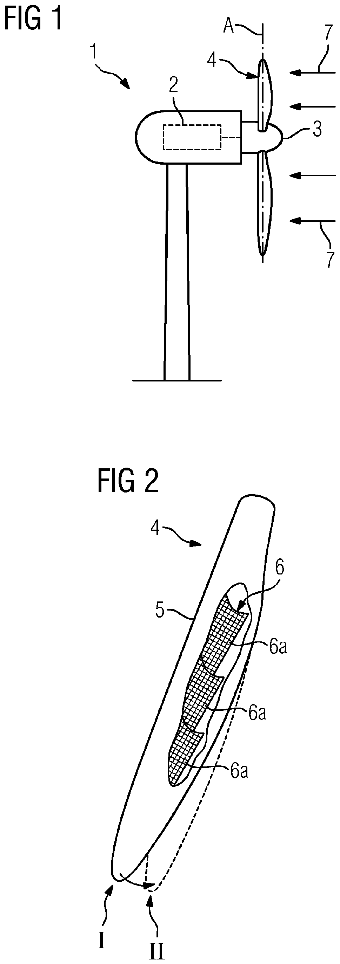

Fig. 1 shows a principle view of an inventive wind turbine 1. The wind turbine 1 may be applicable for offshore applications. The wind turbine 1 is a direct drive wind turbine, i.e. the generator 2 of the wind turbine 1 is directly connected to the rotor hub 3. A number of rotor blades 4 are attached to the rotor hub 3.

The rotor blades 4 are rotatably supported relative to the rotor hub 3, i.e. may rotate around their longitudinal axis A by an inherently created twist or torque under load particularly in times of high wind speed (cf. arrows 7 indicating the externally applied wind forces).

A rotor blade 4 comprises a longitudinal base body 5. The base body 5 is a composite component, i.e. the base body 5 includes fabrics of a multi-layered technical fibre material disposed within a resin-like matrix such as polyurethane for instance. The base body 5 may be at least partially hollow. A stiffening structure 6 is disposed within the base body 5. The stiffening structure 6 serves to provide the base body 5 with additional stiffness or generally mechanical stability.

The stiffening structure 6 is segmented in respective stiffening structure segments 6a, 6b (cf. fig. 2 for instance). Each stiffening structure segment 6a, 6b is also a composite component comprising a stiffening web structure built of a fibre based, particularly carbon fibre based, fabric within a matrix material such as polyurethane for instance.

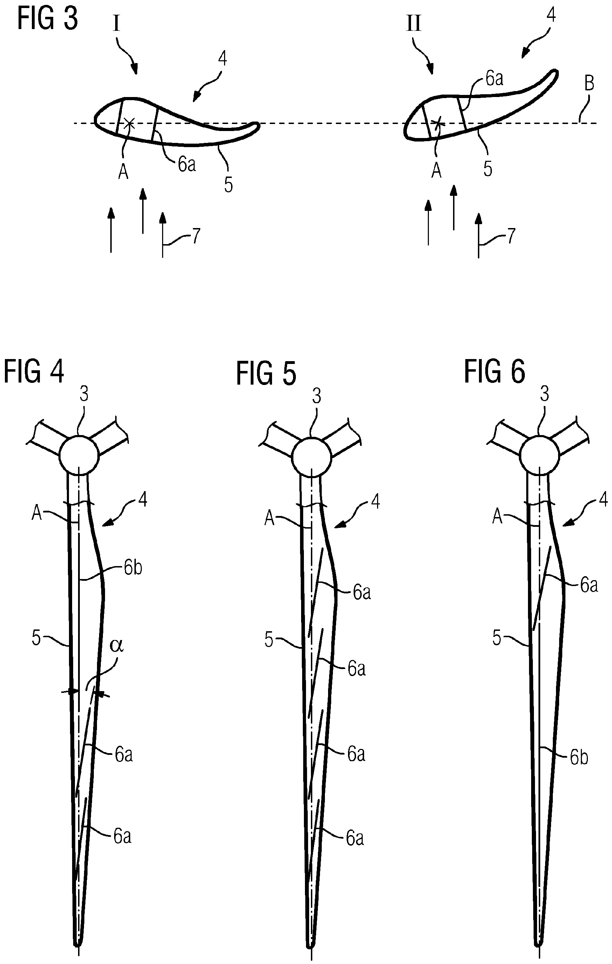

Fig. 2 shows a perspective view of an inventive rotor blade 4 in an unloaded state I and an loaded state II, respectively. Fig. 3 shows respective cross-sectionally cut views of the rotor blade 4 of fig. 2.

As is discernible from fig. 2, the stiffening structure 6 is axially segmented in a number of axially adjacently disposed stiffening structure segments 6a, 6b. Thereby, first stiffening structure segments 6a are disposed with a different position and/or orientation relative to further stiffening structure segments 6b and/or relative to the longitudinal axis A of the base body 5.

The embodiment of fig. 2 shows respective first stiffening structure segments 6a which are tilted relative to the longitudinal axis A of the base body 5. The tilting angle α (cf. fig. 4) of the respective first stiffening structure segments 6a relative to the longitudinal axis A of the base body 5 may be ca. 15 - 20° for instance.

The different position and/or orientation of the first stiffening structure segments 6a relative to the longitudinal axis A of the base body 5 leads to an axially locally different mechanical behaviour of the base body 5 so that the rotor blade 4 will rotate around its longitudinal axis corresponding to the longitudinal axis A of the base body 5 under the application of external load. The degree of rotation of the rotor blade 4 is dependent on the externally applied forces. In such a manner, the angle of attack or the respective area the rotor blade 4 is exposed to the wind is changed resulting in a reduction of the load on the rotor blade 4. The rotation of the rotor blade 4 is to be seen in fig. 2 when comparing the positions and/or orientations of the axially outer portions of the rotor blade 4.

It is discernible from fig. 3 showing cross-sectional cut views of the rotor blade 4 of fig. 2, that the rotor blade 4 has an optimised position relative to the externally applied forces (cf. arrows 7) in the loaded state II (right) in comparison to the unloaded state I (left) due to a rotation around the longitudinal axis A of the base body 5. The rotation is best to be seen when comparing the respective positions and/or orientations of the blade root of the rotor blade 4 in fig. 3 (note auxiliary axis B).

Fig. 4 - 10 show diverse further exemplary embodiments of rotor blades 4, wherein fig. 4, 6, 9 and 10 show embodiments of inventive rotor blades and fig. 5, 7 and 8 show embodiments of rotor blades outside the scope of the invention. The respective embodiments of inventive rotor blades 4 essentially differ in the arrangement, position and/or orientation of respective first stiffening structure segments 6a and/or further stiffening structure segments 6b. Generally, arbitrary arrangements of first stiffening structure segments and further stiffening structure segments 6b are possible. Usually, the base body 5 of the rotor blade 4 is provided with respective stiffening structure segments 6a, 6b axially extending from the blade root to the blade tip.

The embodiment of fig. 4 shows an arrangement of one further stiffening structure segment 6b having an axially inner position and two respective first stiffening structure segments 6a having axially outer positions. The first stiffening structure segments 6a are tilted relative to the longitudinal axis A of the base body 5. The tilting angles α of the two first stiffening structure segments 6a relative to the longitudinal axis A of the base body 5 are different. Overlapping portions are provided between axially adjacently disposed first stiffening structure segments 6a as well as axially adjacently disposed first stiffening structure segments 6a and further stiffening structure segments 6b. The degree of overlap indicates the mechanical stability of the rotor blade 4 in the respective portion of the base body 5. The embodiment of fig. 5 shows a rotor blade 4 having four essentially parallel aligned first stiffening structure segments 6a. Hence, the respective stiffening structure segments 6a have the same tilting angle α relative to the longitudinal axis A of the base body 5. Again, a certain degree of axial overlap is provided between axially adjacently disposed first stiffening structure segments 6a.

Fig. 6 shows an embodiment of a rotor blade 4 having the stiffening structure 6 segmented in only two respective stiffening structure segments 6a, 6b. Thereby, a first stiffening structure segment 6a has an axially inner position in comparison to the further stiffening structure segment 6b. It is discernible from fig. 6 that respective stiffening structure segments do not necessarily comprise the same dimensions.

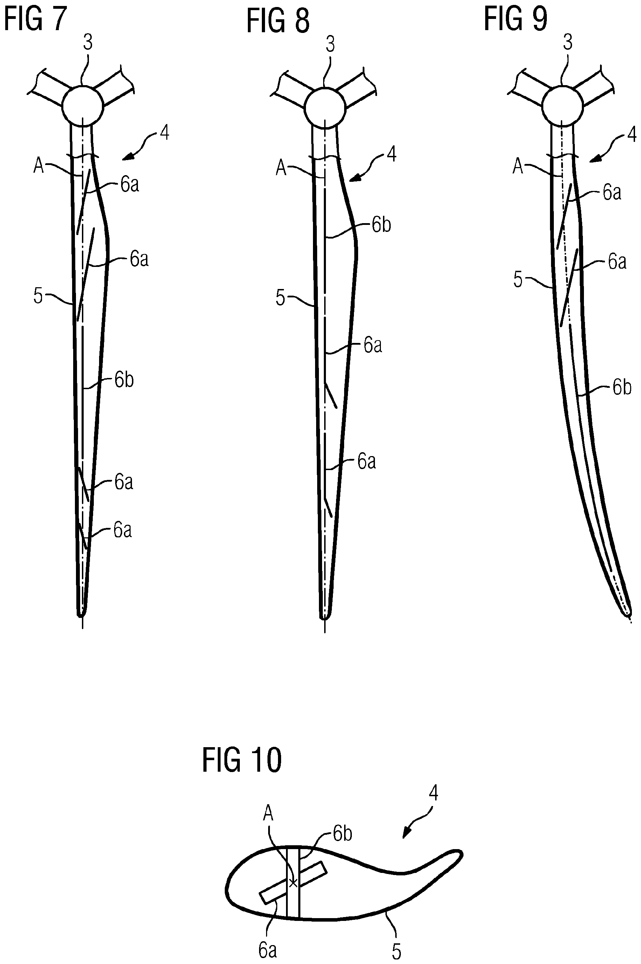

The embodiment of fig. 7 shows an arrangement of five stiffening structure segments 6a, 6b. Thereby, the two first stiffening structure segment 6a having an axially inner position having an opposite orientation in comparison to the two first stiffening structure segments 6a having an axially outer position. Hence, two groups of first stiffening structure segments 6a are built differing in their orientation. A further stiffening structure segment 6b is disposed in between the respective groups of first stiffening structure segments 6a.

Fig. 8 shows an embodiment of respective first stiffening structure segments 6a having a partially different orientation than respective further stiffening structure segments 6b. Thereby, the respective first stiffening structure segments 6a comprise a first portion extending in the direction of the longitudinal axis A of the base body 5 and a second portion extending with an angle relative to the longitudinal axis A of the base body 5. It is possible that a respective partial change of the orientation of respective first stiffening structure segments 6a in comparison to the longitudinal axis A of the base body 5 may also lead to the desired effect of creating an inherent twist or torque of the rotor blade 4 under load.

The embodiment of fig. 9 shows that an inventive rotor blade 4 must not necessarily have a straight shape. The rotor blade 4 of fig. 9 has a partially curved shape. The arrangement of respective stiffening structure segments 6a, 6b is of course also possible with respective curved designs of rotor blades 4. The longitudinal axis A is defined as the line extending from the blade root to the blade tip.

The embodiment of fig. 10 shows that a first stiffening structure segment 6a may be coaxially disposed within the longitudinal axis A of the base body 5. Yet, it is tilted or twisted relative to the at least one further stiffening structure segments 6b.

Although the present invention has been described in detail with reference to the preferred embodiment, the present invention is not limited by the disclosed examples from which the skilled person is able to derive other variations without departing from the scope of the invention defined by the appended claims.

## Claims

1. Rotor blade (4) for a wind turbine (1), comprising a longitudinal rotor blade base body (5) having a longitudinal axis (A), whereby a stiffening structure (6) is disposed within the base body (5), whereby the stiffening structure (6) is divided in at least two, axially adjacently disposed stiffening structure segments (6a, 6b), whereby at least one first stiffening structure segment (6a) is disposed with a different orientation relative to the longitudinal axis (A) of the base body (5) compared with at least one further stiffening structure segment (6b), wherein axially adjacently disposed stiffening structure segments (6a, 6b) at least partially overlap each other in axial direction, **characterised in that** each stiffening structure segment (6a, 6b) is a composite component that comprises a stiffening web structure built of a fibre based fabric within a matrix material.

2. Rotor blade according to claim 1, wherein the at least one first stiffening structure segment (6a) is tilted or twisted relative to the longitudinal axis (A) of the base body (5).

3. Rotor blade according to claim 1 or 2, wherein at least one further stiffening structure segment (6b) is coaxially disposed within the longitudinal axis (A) of the base body (5), whereby a first stiffening structure segment (6a) is tilted or twisted relative to the at least one further stiffening structure segment (6b).

4. Rotor blade according to one of the preceding claims, wherein the at least one first stiffening structure segment (6a) is internally tilted or twisted relative to its own longitudinal axis.

5. Rotor blade according to one of the claim 2, wherein, if two or more first stiffening structure segments (6a) are tilted or twisted relative to the longitudinal axis (A) of the base body (5), the tilting or twisting angles (α) of the respective stiffening structure segments (6a) are equal or different.

6. Rotor blade according to claim 3, wherein, if two or more further stiffening structure segments (6b) are coaxially disposed within the longitudinal axis (A) of the base body (5), whereby the first stiffening structure segments are tilted or twisted relative to the further stiffening structure segments (6b), the tilting or twisting angles (α) of the respective first stiffening structure segments (6a) are equal or different.

7. Rotor blade according to claim 4, wherein, if two or more first stiffening structure segments (6a) are internally tilted or twisted relative to their own longitudinal axis, the tilting or twisting angles (α) of the respective first stiffening structure segments (6a) are equal or different.

8. Rotor blade according to one of the claims 2 to 7, wherein with respect to the longitudinal axis (A) of the base body (5), a first stiffening structure segment (6a) disposed at an axially inner position of the base body (5) is disposed tilted or twisted and at least one further stiffening structure segment (6b) disposed at an axially outer position of the base body (5) is disposed un-tilted, or vice versa.

9. Rotor blade according to one of the claims 2 to 8, wherein a first stiffening structure segment (6a) is tilted or twisted with an angle of 5 - 30°, particularly, 15 - 20°, relative to the longitudinal axis (A) of the base body (5) in clockwise direction or anti-clockwise direction.

10. Rotor blade according to one of the preceding claims, wherein the stiffening structure segments (6a, 6b) are of the same or different dimensions, particularly in longitudinal direction of the base body (5).

11. Rotor blade according to one of the preceding claims, wherein the fibre based fabric is a carbon fibre based fabric.

12. Wind turbine (1), particularly direct drive wind turbine, comprising a rotor hub (3) having at least one rotor blade (4) according to one of the preceding claims attached thereto, whereby the at least one rotor blade (4) is rotatably supported relative to the rotor hub (3).

## Patentansprüche

1. Rotorblatt (4) für eine Windturbine (1), das einen länglichen Rotorblatt-Grundkörper (5) mit einer Längsachse (A) aufweist, wobei eine Versteifungsstrukur (6) in dem Grundkörper (5) angeordnet ist, wobei die Versteifungsstrukur (6) in mindestens zwei axial benachbart angeordnete Versteifungsstrukursegmente (6a, 6b) unterteilt ist, wobei mindestens ein Versteifungsstrukursegment (6a) verglichen mit mindestens einem weiteren Versteifungsstrukursegment (6b) mit einer anderen Ausrichtung relativ zu der Längsachse (A) des Grundkörpers (5) angeordnet ist, wobei axial benachbart angeordnete Versteifungsstrukursegmente (6a, 6b) sich in axialer Richtung mindestens teilweise überlappen, **dadurch gekennzeichnet, dass** jedes Versteifungsstrukursegment (6a, 6b) eine Verbundkomponente ist, die eine Versteifungsstegstruktur aufweist, die aus einem Gewebe auf Faserbasis innerhalb eines Matrixmaterials aufgebaut ist.

2. Rotorblatt nach Anspruch 1, wobei das mindestens eine erste Versteifungsstrukursegment (6a) relativ zu der Längsachse (A) des Grundkörpers (5) geneigt oder gedreht ist.

3. Rotorblatt nach einem der Ansprüche 1 oder 2, wobei mindestens ein weiteres Versteifungsstrukursegment (6b) innerhalb der Längsachse (A) des Grundkörpers (5) koaxial angeordnet ist, wobei ein erstes Versteifungsstrukursegment (6a) relativ zu dem mindestens einen weiteren Versteifungsstrukursegment (6b) geneigt oder gedreht ist.

4. Rotorblatt nach einem der vorhergehenden Ansprüche, wobei das mindestens eine erste Versteifungsstrukursegment (6a) relativ zu seiner eigenen Längsachse intern geneigt oder gedreht ist.

5. Rotorblatt nach Anspruch 2, wobei, wenn zwei oder mehr erste Versteifungsstrukursegmente (6a) relativ zu der Längsachse (A) des Grundkörpers (5) geneigt oder gedreht sind, die Neigungs- oder Drehwinkel (α) der jeweiligen ersten Versteifungsstrukursegmente (6a) gleich oder verschieden sind.

6. Rotorblatt nach Anspruch 3, wobei, wenn zwei oder mehr weitere Versteifungsstrukursegmente (6b) innerhalb der Längsachse (A) des Grundkörpers (5) koaxial angeordnet sind, wobei die ersten Versteifungsstrukursegmente relativ zu den weiteren Versteifungsstrukursegmenten (6b) geneigt oder gedreht sind, die Neigungs- oder Drehwinkel (α) der jeweiligen ersten Versteifungsstrukursegmente (6a) gleich oder verschieden sind.

7. Rotorblatt nach Anspruch 4, wobei, wenn zwei oder mehr erste Versteifungsstrukursegmente (6a) relativ zu ihrer eigenen Längsachse intern geneigt oder gedreht sind, die Neigungs- oder Drehwinkel (α) der jeweiligen ersten Versteifungsstrukursegmente (6a) gleich oder verschieden sind.

8. Rotorblatt nach einem der Ansprüche 2 bis 7, wobei in Bezug auf die Längsachse (A) des Grundkörpers (5) ein an einer axial inneren Position des Grundkörpers (5) angeordnetes erstes Versteifungsstrukursegment (6a) geneigt oder gedreht angeordnet ist und mindestens ein an einer axial äußeren Position des Grundkörpers (5) angeordnetes weiteres Versteifungsstrukursegment (6b) ungeneigt angeordnet ist oder umgekehrt.

9. Rotorblatt nach einem der Ansprüche 2 bis 8, wobei ein erstes Versteifungsstrukursegment (6a) um einen Winkel von 5 bis 30°, insbesondere 15 bis 20°, relativ zu der Längsachse (A) des Grundkörpers (5) im Uhrzeigersinn oder gegen den Uhrzeigersinn geneigt oder gedreht ist.

10. Rotorblatt nach einem der vorhergehenden Ansprüche, wobei die Versteifungsstrukursegmente (6a, 6b) die gleichen oder unterschiedliche Abmessungen haben, insbesondere in Längsrichtung des Grundkörpers (5).

11. Rotorblatt nach einem der vorhergehenden Ansprüche, wobei das Gewebe auf Faserbasis ein Gewebe auf Kohlenstoff-Faserbasis ist.

12. Windturbine (1), insbesondere eine Direktantrieb-Windturbine, mit einer Rotornabe (3), an der mindestens ein Rotorblatt (4) nach einem der vorhergehenden Ansprüche angebracht ist, wobei das mindestens eine Rotorblatt (4) relativ zu der Rotornabe (3) drehbar gelagert ist.

## Revendications

1. Pale de rotor (4) pour une éolienne (1), comprenant un corps de base de pale de rotor longitudinal (5) présentant un axe longitudinal (A), dans laquelle une structure de renfort (6) est disposée dans le corps de base (5), dans laquelle la structure de renfort (6) est divisée en au moins deux segments de structure de renfort, disposés de manière axialement adjacente (6a, 6b), dans laquelle
au moins un premier segment de structure de renfort (6a) est disposé selon une orientation différente relativement à l'axe longitudinal (A) du corps de base (5) par rapport à au moins un segment de structure de renfort ultérieur (6b), dans laquelle des segments de structure de renfort disposés de manière axialement adjacente (6a, 6b) se recouvrent au moins partiellement l'un l'autre dans une direction axiale, **caractérisée en ce que**
chaque segment de structure de renfort (6a, 6b) est un composant composite qui comprend une structure de bande de renfort réalisée en un tissu à base de fibre dans un matériau matrice.

2. Pale de rotor selon la revendication 1, dans laquelle l'au moins un premier segment de structure de renfort (6a) est incliné ou torsadé relativement à l'axe longitudinal (A) du corps de base (5).

3. Pale de rotor selon la revendication 1 ou 2, dans laquelle au moins un segment de structure de renfort ultérieur (6b) est disposé de manière coaxiale dans l'axe longitudinal (A) du corps de base (5), dans laquelle un premier segment de structure de renfort (6a) est incliné ou torsadé relativement à l'au moins un segment de structure de renfort ultérieur (6b).

4. Pale de rotor selon l'une des revendications précédentes, dans laquelle l'au moins un premier segment de structure de renfort (6a) est incliné ou torsadé intérieurement relativement à son propre axe longitudinal.

5. Pale de rotor selon la revendication 2, dans laquelle, si deux premiers segments de structure de renfort (6a) ou plus sont inclinés ou torsadés relativement à l'axe longitudinal (A) du corps de base (5), les angles d'inclinaison ou de torsion (α) des segments de structure de renfort respectifs (6a) sont égaux ou différents.

6. Pale de rotor selon la revendication 3, dans laquelle, si deux segments de structure de renfort ultérieurs ou plus (6b) sont disposés de manière coaxiale dans l'axe longitudinal (A) du corps de base (5), dans laquelle les premiers segments de structure de renfort sont inclinés ou torsadés relativement aux segments de structure de renfort ultérieurs (6b), les angles d'inclinaison ou de torsion (α) des premiers segments de structure de renfort respectifs (6a) sont égaux ou différents.

7. Pale de rotor selon la revendication 4, dans laquelle, si deux premiers segments de structure de renfort (6a) ou plus sont inclinés ou torsadés intérieurement relativement à leur propre axe longitudinal, les angles d'inclinaison ou de torsion (α) des premiers segments de structure de renfort respectifs (6a) sont égaux ou différents.

8. Pale de rotor selon l'une des revendications 2 à 7, dans laquelle relativement à l'axe longitudinal (A) du corps de base (5), un premier segment de structure de renfort (6a) disposé dans une position axialement interne du corps de base (5) est disposé de manière inclinée ou torsadée et au moins un segment de structure de renfort ultérieur (6b) disposé dans une position axialement extérieure du corps de base (5) est disposé de manière non-inclinée, ou inversement.

9. Pale de rotor selon l'une des revendications 2 à 8, dans laquelle un premier segment de structure de renfort (6a) est incliné ou torsadé selon un angle compris entre 5 et 30°, en particulier, compris entre 15 et 20°, relativement à l'axe longitudinal (A) du corps de base (5) dans le sens des aiguilles d'une montre ou dans le sens contraire aux aiguilles d'une montre.

10. Pale de rotor selon l'une des revendications précédentes, dans laquelle les segments de structure de renfort (6a, 6b) sont de dimensions identiques ou différentes, en particulier dans la direction longitudinale du corps de base (5).

11. Pale de rotor selon l'une des revendications précédentes, dans laquelle le tissu à base de fibre est un tissu à base de fibre de carbone.

12. Éolienne (1), en particulier éolienne à entraînement direct, comprenant un moyeu de rotor (3) présentant au moins une pale de rotor (4) selon l'une des revendications précédentes, qui y est fixée, dans laquelle l'au moins une pale de rotor (4) est supportée en rotation relativement au moyeu de rotor (3).
